# EUROPÄISCHE PATENTSCHRIFT

(11) **EP 1 599 369 B1**
(45) Veröffentlichungstag und Bekanntmachung des Hinweises auf die Patenterteilung: **02.08.2006**
(21) Anmeldenummer: 04737279.2
(22) Anmeldetag: 17.02.2004
(51) Int. Cl.: B60R 21/01

(54) **VERFAHREN UND VORRICHTUNG ZUR ERKENNUNG EINES AUFPRALLS**
METHOD AND DEVICE FOR RECOGNIZING A COLLISION
PROCEDE ET DISPOSITIF DE RECONNAISSANCE DE COLLISION

(30) Priorität: 03.03.2003 DE 10309227
(43) Veröffentlichungstag der Anmeldung: 30.11.2005
(73) Patentinhaber: SIEMENS AKTIENGESELLSCHAFT, 80333 München (DE)
(72) Erfinder: BONITZ, Jochen, 93057 Regensburg (DE)
(86) Internationale Anmeldenummer: PCT/EP2004/001492
(87) Internationale Veröffentlichungsnummer: WO 2004/078531

(56) Entgegenhaltungen:
- EP-A- 1 323 592
- DE-A- 19 644 975
- DE-C- 10 042 376

## Beschreibung

Die Erfindung betrifft ein Verfahren nebst Vorrichtung zur Erkennung eines Aufpralls, insb. eines Seitenaufpralls, für Insassenschutzmittel in einem Kraftfahrzeug.

In herkömmlichen Algorithmen, insb. zur Seitenairbagauslösung, werden beispielsweise höhere Frequenzanteile des Ausgangssignals (a) eines Beschleunigungs- oder Drucksensors allenfalls nur in geringem Umfang ausgenutzt. Terme wie "Jerk" oder "delta_a" betrachten meist ein Integral der Einzeldifferenzen zweier aufeinanderfolgender Abtastwerte. Diese Berechnung liefert einen Anhaltswert dafür, ob höhere Frequenzen in nicht zu vernachlässigender Amplitude vorhanden sind, gibt jedoch keine Auskunft über die tatsächlich vorkommenden Frequenzen oder ihre Verteilung. Zudem sind solche Kriterien stark amplitudenabhängig.

Die DE-C-10042376 zeigt ein Verfahren zur Erkennung eines Aufpralls für Insassenschutzmittel in einem Kraftfahrzeug, bei dem kontinuierlich ein Signalabschnitt des Ausgangssignal eines Beschleunigungssensor im Hinblick auf die darin enthaltenen Frequenzen analysiert wird, wobei das im Signalabschnitt enthaltene Frequenzspektrum zunächst in eine geeignete Anzahl Frequenzbänder aufgeteilt wird, und anschließend für jedes Frequenzband die vorhandene Signalenergie ermittelt wird.

Der vorliegenden Erfindung liegt daher die Aufgabe zugrunde, ein verbessertes Verfahren nebst Vorrichtung zur Erkennung eines Aufpralls, insb. eines Seitenaufpralls, für Insassenschutzmittel in einem Kraftfahrzeug anzugeben.

Diese Aufgabe wird durch die unabhängigen Patentansprüche gelöst. Vorteilhafte Aus- und Weiterbildungen, welche einzeln oder in Kombination miteinander einsetzbar sind, werden in den abhängigen Ansprüchen angegeben.

Das erfindungsgemäße Verfahren zur Erkennung eines Aufpralls, insb. eines Seitenaufpralls, für Insassenschutzmittel in einem Kraftfahrzeug, zeichnet sich dadurch aus, dass kontinuierlich ein Signalabschnitt des Ausgangssignal (a) eines Beschleunigungs- oder Drucksensors im Hinblick auf die darin enthaltenen Frequenzen analysiert wird.

Dabei macht die Erfindung von folgenden physikalischen Überlegung zu den Vorgängen, insb. beim Seitenaufprall, gebrauch. Verschiedene Nicht-Auslöse-Situationen, sog. "Misuse" wie beispielsweise seitlicher Anprall des Fahrzeuges an einen Bordstein, Hammerschlag gegen das Fahrzeug, Türzuschlagen, oder dergleichen mehr, erzeugen zum Teil Ausgangssignale (a) mit Amplituden ähnlich hoch denen von Muss-Auslöse-Situationen. Im Unterschied zu diesen enthalten sie jedoch meist nur ein oder zwei typische Frequenzen, die durch die Fahrzeugkonstruktion bestimmt sind welche da wären Schwingungen des Fahrwerks, Schwingungen im Fahrzeug, Resonanzen der Befestigungsstellen des Sensors, oder ähnliches. Muss-Auslöse-Situationen, insb. für den Seitenairbag, sind dagegen durch die Instrusion, also dem Eindringen eines Objektes in das Fahrzeug und damit durch die Deformation der Seitenstruktur gekennzeichnet. Diese Deformation führt im Ausgangssignal (a) des Beschleunigungs- oder Drucksensors zu einem breiten Spektrum vieler Frequenzen, verursacht durch die Verformung oder das Brechen von Strukturen des Fahrzeugs. Die Verteilung der Frequenzen im Ausgangssignal (a) des Beschleunigungs- oder Drucksensors wird nach der Erfindung nun als ein Erkennungsmerkmal für Muss-Auslöse-Situationen herangezogen.

Dazu wird erfindungsgemäß das im Signalabschnitt enthaltene Frequenzspektrum zunächst in eine geeignete Anzahl Frequenzbänder bzw. -bereiche aufgeteilt. Anschließend wird für jedes Frequenzband die vorhandene Signalenergie ermittelt. Danach wird die partielle Signalenergie mit der gesamten Energie des betrachteten Signalabschnitts ins Verhältnis gesetzt. Schließlich werden die so gewonnenen relativen Aktivierungen der verschiedenen Frequenzbänder mit, ggf. fest, vorgegebenen Schwellwerten (SW) verglichen.

Die Signalenergie des jeweiligen Frequenzbandes lässt sich beispielsweise mit Hilfe der sog. Walsh-Transformation ermitteln, welche mitunter auch als Hadamard-Transformation bezeichnet wird. Dabei werden die Einzelwerte des Signalabschnitts des Ausgangssignals nacheinander mit verschiedenen alternierenden Folgen von "+1" und "-1" in der jeweiligen Frequenz eines jeden Frequenzbandes multipliziert und die Resultate aufaddiert. Der Rückgriff auf die Wash-Transformation reduziert in vorteilhafter Weise den Berechnungsaufwand gegenüber herkömmlichen Frequenzanalysen erheblich. Freilich sind auch andere zweckmäßige Transformationen denkbar und mitumfasst.

Um schnelle Schwankungen in der Auswertung zu vermeiden wird in einer Weiterbildung der Erfindung vorgeschlagen, die relativen Aktivierungen der verschiedenen Frequenzbänder vor dem Vergleich mit den vorgegebenen Schwellwerten (SW) zu glätten.

Erfindungsgemäß bevorzugt gilt die Anzahl der überschrittenen Schwellwerte (SW) als Maßzahl dafür, ob nur wenige Frequenzen enthalten sind, oder ob der betrachtete Signalabschnitt ein breites Spektrum vieler Frequenzen gleichzeitig enthält.

Vorzugsweise kann die Maßzahl, ggf. durch Subtraktion mit einem festen oder variablen Faktor, positive wie negative Werte annehmen, beispielsweise von - 3 bis + 4.

Alternativ oder kumulativ erfährt die Maßzahl eine Wichtung, indem sie beispielsweise mit einem, vorzugsweise frei einstellbaren, Skalierungsfaktor multipliziert wird.

Nach der Erfindung fließ die Maßzahl bevorzugt in eine Auslöseschwelle ein, mit welcher ein Auslösekriterium für die Insassenschutzmittel gemeinhin verglichen wird, wobei erst beim Überschreiten der Auslöseschwelle die Freigabe der Insassenschutzmittel erfolgt. Insbesondere wird die Maßzahl nun verwendet, um die Auslöseschwelle für den Airbag empfindlicher (bei hoher Maßzahl) oder unempfindlicher zu machen (bei niedriger Maßzahl).

Die Erfindung betrifft auch eine Vorrichtung zur Erkennung eines Aufpralls, insb. eines Seitenaufpralls, für Insassenschutzmittel in einem Kraftfahrzeug, mit wenigstens einem Mittel, welches kontinuierlich das Ausgangssignal (a) eines Beschleunigungs- oder Drucksensors im Hinblick auf die darin enthaltenen Frequenzen nach dem zuvor beschriebenen Verfahren analysiert.

Soweit die Vorrichtung insb. der Bereitstellung eines Signalabschnittes dienen soll wird vorgeschlagen, einen Puffer fester Länge vorzusehen, in welchem das zu analysierende Ausgangssignal (a) so zwischengespeichert wird, dass die Analyse zum aktuellen Zeitpunkt immer einen Signalabschnitt des Ausgangssignals (a) vom aktuellsten oder einen anderen geeigneten Wert bis zu einem definierten Zeitraum in der Vergangenheit bearbeitet.

Vorzugsweise wird jeder neue Wert in einem Puffer, insb. einem sog. Ringpuffer, fester Länge gespeichert, wobei insb. der jeweils älteste Wert des Ausgangssignals (a) durch den aktuellsten ersetzt wird. Die Analyse verwendet in vorteilhafter Weise den gesamten im Puffer gespeicherten Signalabschnitt.

Schließlich sei erwähnt, dass sich eine Anordnung von Beschleunigungs- bzw. Drucksensoren im oder benachbart eines potentiellen Deformationsbereiche im Kraftfahrzeug bewährt hat, vorzugsweise paarweise auf Höhe einer jeden Sitzreihe.

Die vorliegende Erfindung analysiert das Ausgangssignals (a) eines Beschleunigungs- oder Drucksensors auf Frequenzen innerhalb eines bestimmten interessanten Bereichs bzw. Signalabschnitts. Sie beschreibt eine verbesserte Methode, insb. bei Seitenaufprallereignissen, eine Unterscheidung von Nicht-Auslöse-Situationen und Muss-Auslöse-Situationen zu treffen, indem das Frequenzspektrum des Ausgangssignals (a) möglichst umfassend ausgewertet wird.

Die Vorteile der Erfindung liegen zum einen in der Robustheit gegenüber Veränderungen der Signalamplituden. Zum anderen benötigt die Erfindung keine Vorkenntnisse oder einen entsprechenden Informationsspeicher über mögliche Resonanzfrequenzen. Nicht zuletzt ist es eine Stärke der Erfindung, dass keinerlei Frequenzen des Ausgangssignals (a) geblockt oder ausgeblendet werden.

Weitere Vorteile der Erfindung und deren Weiterbildungen werden im Folgenden anhand von Ausführungsbeispielen und der Zeichnung näher erläutert.

Darin zeigen schematisch:
- Fig. 1: den typischen Aufbau eines Insassenschutz-Systems in einem Kraftfahrzeug;
- Fig. 2: die typischen Abfolgen (Sequenzen) der Wash-Transformation;
- Fig. 3: ein erstes Beispiel einer Frequenzanalyse im Fall einer Muss-Auslöse-Situation;
- Fig. 4: ein zweites Beispiel einer Frequenzanalyse im Fall einer Muss-Auslöse-Situation;
- Fig. 5: ein erstes Beispiel einer Frequenzanalyse im Fall einer Nicht-Auslöse-Situation; und
- Fig. 6: ein zweites Beispiel einer Frequenzanalyse im Fall einer Nicht-Auslöse-Situation.

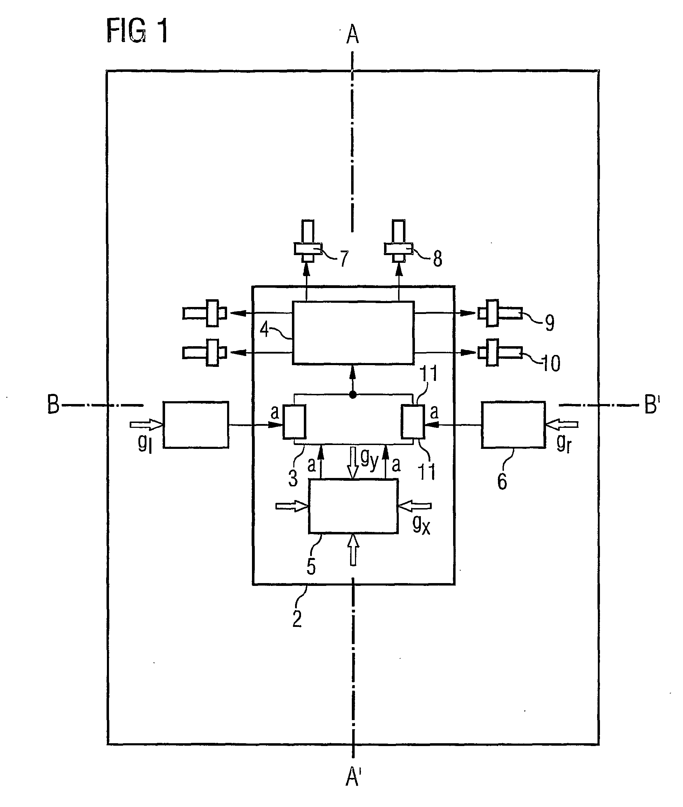

Fig. 1 zeigt den typischen Aufbau eines Insassenschutz-Systems in einem Kraftfahrzeug 1. An einer z.B. möglichst zentralen Stelle im Kraftfahrzeug 1 befindet sich eine Steueranordnung 2. Diese umfasst eine Auswerteeinheit 3 beispielsweise in Gestalt wenigstens eines Mikrocontrollers. In der Steueranordnung 2 oder benachbart zu dieser befindet sich ein Sensorfeld 5, in welchem Sensoren (nicht dargestellt) zur Messung von Beschleunigungen, z.B. einer Beschleunigung gₓ entlang einer Empfindlichkeitsachse in x-Richtung bzw. g_{y} entlang einer Empfindlichkeitsachse in y-Richtung, zweckmäßig angeordnet sind. Die Empfindlichkeitsachsen der Sensoren spannen eine Ebene auf, welche nach Einbau der Steueranordnung 2 in einem Kraftfahrzeug 1 im Wesentlichen parallel ist zu einer durch die Fahrzeuglängsachse A-A' und die Fahrzeugquerachse B-B' festgelegten Ebene. Weitere Sensoren 6, insb. zur Erkennung eines Seitenaufpralls, sind zur Messung von seitlichen Beschleunigungen, z.B. einer Beschleunigung gᵣ von rechts bzw. gₗ von links, an dezentraler Stelle seitlich im Kraftfahrzeug 1 angeordnet, vorzugsweise also im oder benachbart eines potentiellen Deformationsbereiches während eines Unfalls, insbesondere an einem geeigneten Ort in oder in der Nähe der Fahrzeugtüren, beispielsweise am Türschweller der Fahrer und Beifahrertür, am Fußpunkt der B- oder C-Säule oder am Radhaus oder dergleichen. Vorzugsweise sind die Sensoren zudem paarweise angeordnet, d.h. jeweils links und rechts im Fahrzeug, insb. benachbart zu einer jeden Sitzreihe. Als Sensoren 6 für den seitlichen Einbau finden typischerweise Beschleunigungssensoren, in jüngerer Zeit zunehmend aber auch Drucksensoren, Verwendung. Die jeweiligen Ausgangssignale (a) der Sensoren werden vom Mikrocontroller 3 abgefragt, welcher anschließend einen Crash-Unterscheidungsalgorithmus ausführt, um zwischen einem tatsächlichen Aufprall, also einer Muss-Auslöse-Situation, und dem normalen dynamischen Fahrzeugverhalten beziehungsweise einer typischen Nicht-Auslöse-Situation zu differenzieren. Der Mikrocontroller 3 führt mittels einem Diagnosesystem auch eine kontinuierliche und/oder zyklische Diagnose des Systems durch, um sicherzustellen, dass es ordnungsgemäß arbeitet und im Falle eines Unfalls zur Verfügung steht. Die im zentralen Sensorfeld 5 angeordneten Sensoren müssen ebenso wie die seitlich angeordneten Sensoren 6 äußerst zuverlässig sein, damit sie dem Mikrocontroller 3 keine falschen Signale (a) schicken, was zu einer unerwünschten Aktivierung der Rückhaltemittel führen könnte. Jede Störung wird daher dem Fahrer z.B. durch eine Airbag-Warnlampe auf der Instrumententafel (nicht dargestellt) mitgeteilt. Wenn die Airbags bei einem Aufprall entfaltet werden müssen, aktiviert der Mikrocontroller 3 einen Zündstromschalter 4, so dass Strom durch die Zündkreise des Zünders für den Fahrer-Front-Airbag 7, des Zünders für den Beifahrer-Front-Airbag 8, des Zünders für den Seiten-Airbag 9, des Zünders für den Gurtstraffer 10, oder dergleichen mehr fließt, womit die Gurtstraffer aktiviert und die Gaserzeugungsreaktion innerhalb der Aufblasmodule ausgelöst sind.

Die Erfindung sei im Folgenden am Beispiel der Frequenzanalyse des Ausgangssignals (a) eines seitlich im Fahrzeug angeordneten Beschleunigungssensors 6 näher erläutert. Besagtes Ausgangssignal (a) wird bevorzugt zunächst in einem Puffer 11 zwischengespeichert. Als Puffer 11 bietet sich beispielsweise ein sog. Ringpuffer an. Ein Ringpuffer ist ein Mechanismus, mit dem zwei (oder mehr) Prozesse miteinander Daten austauschen können. Er hat eine frei bestimmbare feste Größe und wird allgemein durch einen Vektor (array) entsprechender Größe gebildet. Während ein Prozess, der Schreiber, solange Daten in den Puffer schreiben darf, bis dieser voll ist, kann ein Leser logischerweise nur lesen, wenn überhaupt Daten im Puffer vorhanden sind. Schreiber und Leser beginnen ihren Zugriff auf den Puffer jeweils an der selben Stelle. Wird das Ende des Puffers erreicht, beginnen sowohl Schreib- als auch Lesevorgang wieder am Anfang des Puffers.

Die erfindungsgemäß bevorzugte Verwendung eines Puffers 11 dient primär der Bereitstellung eines Abschnitts des Signals (a). Mit dem Puffer 11 lassen sich Abtastwerte des zu analysierenden Ausgangssignals (a) so zwischenspeichern, dass zum aktuellen Zeitpunkt immer ein Signalabschnitt des Ausgangssignals (a) vom aktuellsten oder einen anderen geeigneten Wert bis zu einem definierten Zeitraum in der Vergangenheit auf darin enthaltene Frequenzen analysiert wird.

Die Analyse selbst beginnt zunächst mit der Aufteilung des im Signalabschnitt enthaltenen Frequenzspektrums in eine geeignete Anzahl Frequenzbänder bzw. -bereiche. Umfasst ein jeder Signalabschnitt beispielsweise sechszehn Beschleunigungswerte (entspricht im u.a. Beispiel 8 ms), so sind maximal sechszehn Bänder berechenbar, welche aber nicht alle interessieren müssen, insbesondere wenn das Ausgangssignal (a) zuvor einen Bandpassfilter, z.B. 4. Ordnung, durchläuft, so dass bei typischen Frequenzen größer 600 Hz oder 800 Hz das Signal (a) stark gedämpft vorliegt und eine Analyse auf derart kaum auslenkende Signalbereiche wenig zielführend ist.

Anschließend wird für jedes Frequenzband die vorhandene Signalenergie ermittelt. Darunter wird die Energie verstanden, die ein bestimmter Frequenzanteil im Gesamtsignal einnimmt. Die Signalenergie des jeweiligen Frequenzbandes wird vorzugsweise mit Hilfe der sog. Walsh-Transformation ermittelt. Dabei werden die Einzelwerte des Signalabschnitts des Ausgangssignals nacheinander mit verschiedenen alternierenden Folgen von "+1" und "-1" in der jeweiligen Frequenz eines jeden Frequenzbandes multipliziert und die Resultate später aufaddiert.

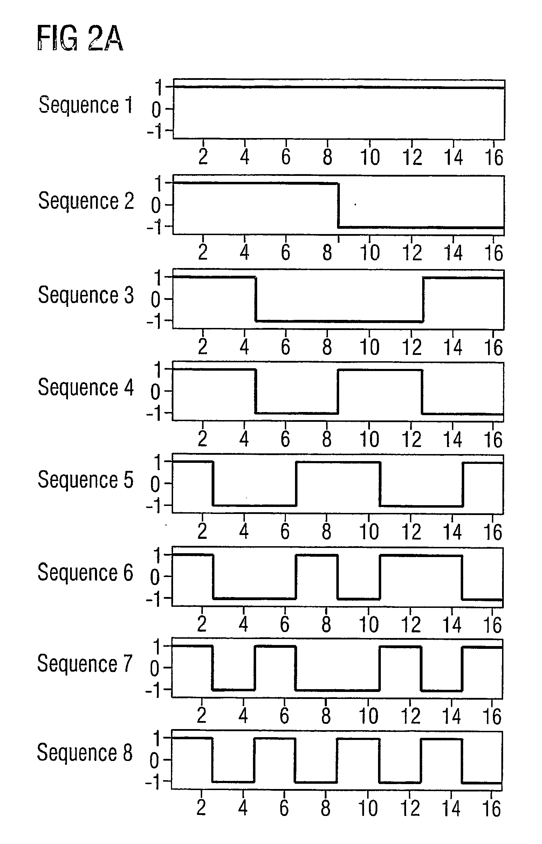

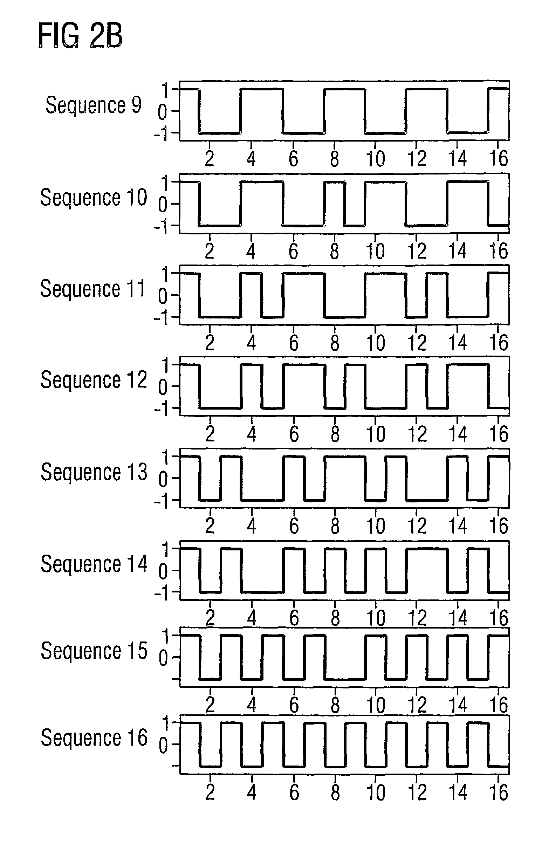

Fig. 2 zeigt die typischen Abfolgen (Sequenzen) einer Walsh-Transformation. Die Walsh-Transformation ist in Analogie zur Fourier-Transformation aufgebaut, wobei die Rolle der trigonometrischen Funktionen von den Walsh-Funktionen übernommen wird. Walsh-Funktionen sind sehr einfache sog. Treppenfunktionen, also stückweise konstante Funktionen. Sie nehmen nur die zwei Funktionswerte "+1" und "-1" an. Diese zwei Funktionswerte entsprechen zwei Zuständen, so dass Walsh-Funktionen besonders einfach in einem Computer, beispielsweise im Mikrocontroller 3, realisiert werden können. Das vollständige orthogonale Walsh-Funktionensystem hat mit den trigonometrischen Funktionen viele Eigenschaften gemeinsam. Ebenso wie auf der Basis von Sinus- und Cosinus-Funktionen die endliche Fourier-Analyse und die diskrete Fourier-Transformation entwickelt wurde, gibt es auch für das System der Walsh-Funktionen eine endliche und diskrete Walsh-Transformation.

Diese sog. partielle Signalenergie wird anschließend mit der gesamten Energie des betrachteten Signalabschnitts ins Verhältnis gesetzt. Die Gesamtenergie lässt sich beispielsweise durch Aufsummierung der Beträge der einzelnen Beschleunigungswerte im betrachteten Signalabschnitt beschaffen.

Schließlich werden die so gewonnenen relativen Aktivierungen der verschiedenen Frequenzbänder ggf. geglättet, um einen etwaigen Phasenverzug auszumitteln, und mit vorgegebenen Schwellwerten (SW) verglichen, wobei vorzugsweise für jedes Frequenzband ein eigener Schwellwert (SW) vorgesehen ist.

Die Anzahl der überschrittenen Schwellwerte (SW) gilt nun als Maßzahl dafür, ob wie typischerweise in Nicht-Auslöse-Situationen nur wenige Frequenzen enthalten sind, oder ob der betrachtete Signalabschnitt ein breites Spektrum vieler Frequenzen gleichzeitig enthält, was charakteristisch für eine Muss-Auslöse-Situation ist. Die Verteilung der Frequenzen im Ausgangssignal (a) des Sensors wird nach der Erfindung nun als ein Erkennungsmerkmal für Muss-Auslöse-Situationen herangezogen.

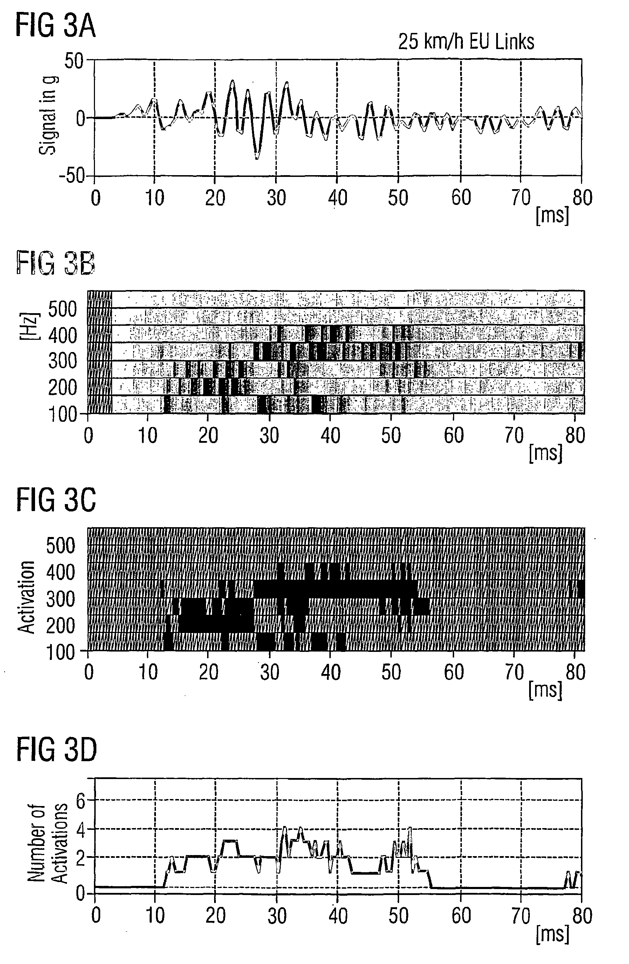

Fig. 3 bis 6 zeigen Beispiele einer Frequenzanalyse im Fall von Muss- und Nicht-Auslöse-Situationen. Die Daten im Puffer 11 wurden vom Mikrocontroller 3 der Steueranordnung 2 eines Kraftfahrzeuges 1 beispielsweise mit einer Abtastrate (sample rate) von SR = 2 kHz abgetastet. Die in Fig. 2 gezeigten Abfolgen (Sequences) repräsentieren insoweit Frequenzbänder zwischen 0 Hz (Sequenz 1) und SR/2 = 1 kHz (Sequenz 16). Sequenz 3 beispielsweise repräsentiert ein Frequenzband von 133 Hz, Sequenz 6 ein Frequenzband von 333 Hz; Sequenz 8 ein Frequenzband von 500 Hz und Sequenz 9 ein Frequenzband von 533 Hz. Abgefragt wurden nur für die Analyse zweckmäßige Frequenzbereiche, nämlich sieben Frequenzbänder für die Sequenzen 3 bis 9. Die niedrigeren Bereiche (Sequenz 2 und 1) gaben aufgrund ihrer langsamen Bewegung bzw. fehlenden Oszillation keinen Hinweis aus einen Crash; die hohen Frequenzen waren aufgrund der schon erwähnten Signaldämpfung wenig aussagekräftig.

Fig. 3 zeigt ein erstes Beispiel einer Frequenzanalyse im Fall einer Muss-Auslöse-Situation. Fig. 3a zeigt das Beschleunigungssignal g während eines Tests des Typs "25 EU L", d.h. während des Aufprall einer sog. Europa Barriere gegen die linke Seite eines Kraftfahrzeuges mit 25 km/h. Fig. 3b zeigt als Grautonbild das im Signalabschnitt enthaltene Frequenzspektrum Hz, aufgeteilt auf sieben Frequenzbänder. Das unterste Frequenzband entspricht der Sequenz 3 aus Figur 2, das oberste Frequenzband der Sequenz 9. Je dunkler der Grauwert, desto aktiver, d.h. energiereicher bezogen auf die Gesamtenergie, liegt eine bestimmte Frequenz im Signal vor. Diese sog. relative Aktivierung der verschiedenen Frequenzbänder lässt sich nun mit einem vorgegebenen Schwellwert vergleichen. Fig. 3c zeigt die oberhalb der jeweiligen Schwelle liegenden Werte die sog. Activation; Fig. 3d die aufaddierten Resultate (Number of Activations), welche nach dem Ausführungsbeispiel acht Werte, nämlich von 0 bis +7, annehmen können. Um bei hohen Resultaten bzw. Maßzahlen eine Auslöseschwelle empfindlicher beziehungsweise bei niedriger Maßzahl die Auslöseschwelle unempfindlicher werden zu lassen, mit welcher ein Auslösekriterium für das Insassenschutzmittel gemeinhin verglichen wird, bietet sich an, den Maßzahlbereich nicht nur positive sondern auch negative Werte annehmen zu lassen. Dies erfolgt erfindungsgemäß bevorzugt durch Subtraktion mit einem ggf. festen Faktor, beispielsweise drei, so dass der Wertebereich anschließend von -3 bis +4 reicht; eine niedrige Maßzahl bevorzugt also ein negatives Vorzeichen und eine hohe Maßzahl ein positives Vorzeichen aufweist. Um Auslöseschwellen mit drei oder vierstelligen Wortgrößen hinreichend beeinflussen zu können, wird vorgeschlagen, die Maßzahl mit einem vorzugsweise frei einstellbaren, beispielsweise zwei oder dreistelligen, Skalierungsfaktor zu multiplizieren.

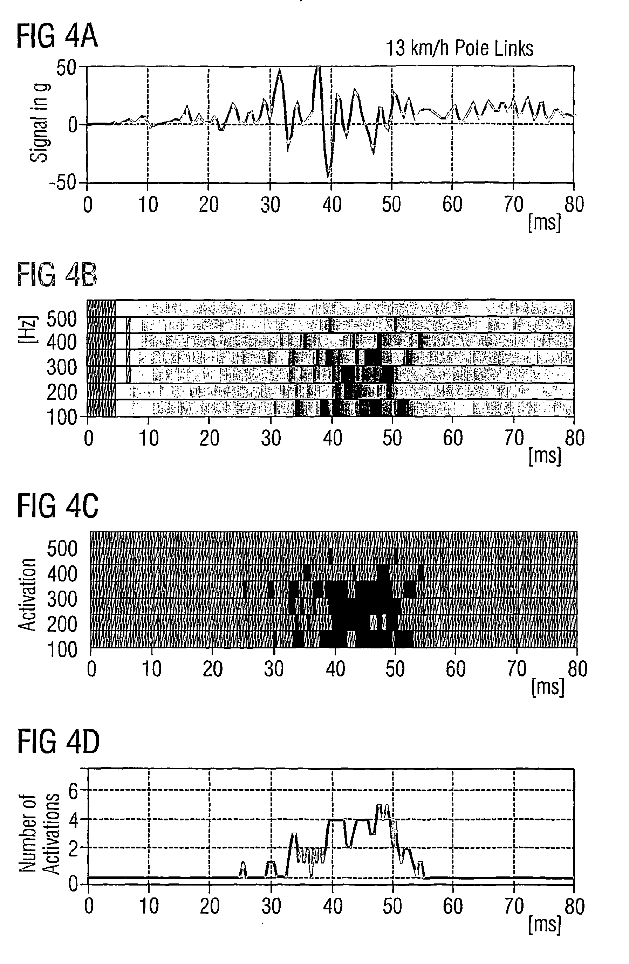

Fig. 4 zeigt ein zweites Beispiel einer Frequenzanalyse im Fall einer typischen Muss-Auslöse-Situation. Fig. 4a zeigt das Beschleunigungssignal g während eines Tests des Typs "13 Pole L", d.h. während des linken Aufprall eines Kraftfahrzeuges an einen Pfahl mit 13 km/h. Fig. 4b zeigt das Grautonbild des im Signalabschnitt enthaltene Frequenzspektrum, aufgeteilt auf die Frequenzbänder. Fig. 4c zeigt die oberhalb der jeweiligen Schwelle liegenden Werte; Fig. 4d die aufaddierten Resultate.

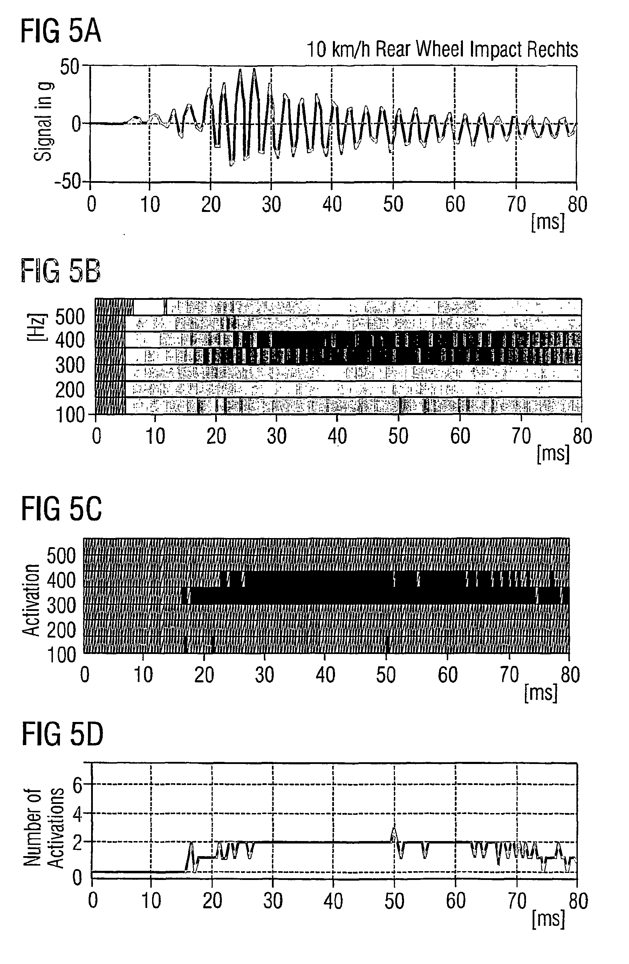

Fig. 5 zeigt ein erstes Beispiel einer Frequenzanalyse im Fall einer typischen Nicht-Auslöse-Situation. Fig. 5a zeigt das Beschleunigungssignal g während eines Tests des Typs "Rear Wheel Impact R", d.h. während des Anpralls des hinteren rechten Reifens eines Kraftfahrzeuges beispielsweise an einen Bordstein mit 10 km/h. Fig. 5b zeigt das zugehörige Grautonbild des im Signalabschnitt enthaltene Frequenzspektrum, aufgeteilt auf sieben Frequenzbänder. Fig. 5c zeigt die oberhalb der jeweiligen Schwelle liegenden Werte; Fig. 5d die aufaddierten Resultate.

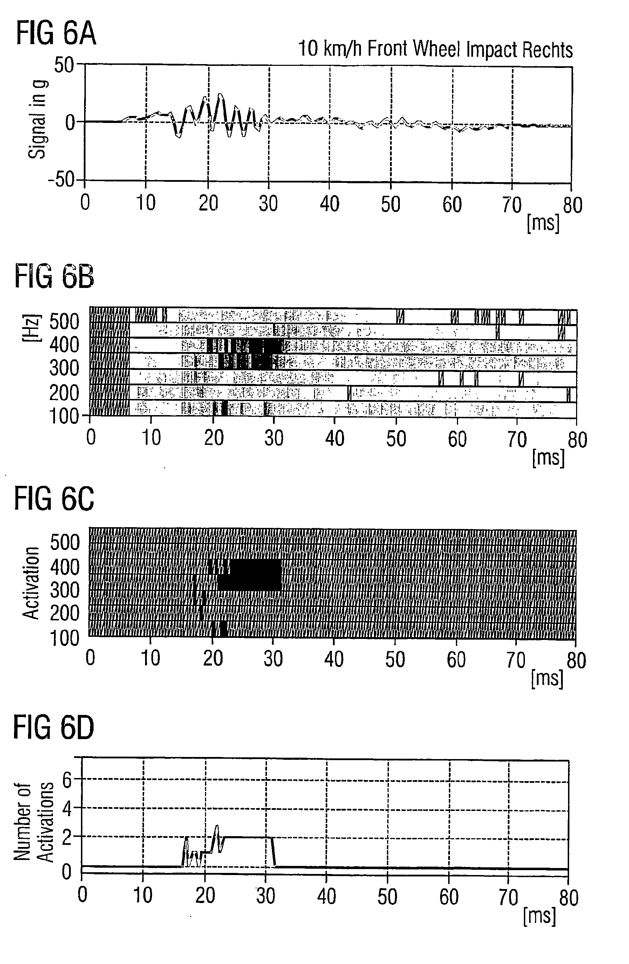

Fig. 6 zeigt ein zweites Beispiel einer Frequenzanalyse im Fall einer typischen Nicht-Auslöse-Situation. Fig. 6a zeigt das Beschleunigungssignal g während eines Tests des Typs "Front Wheel Impact R", d.h. während des Anprall des vorderen rechten Reifens eines Kraftfahrzeuges beispielsweise an einen Bordstein mit 10 km/h. Fig. 6b zeigt das zugehörige Grautonbild des im Signalabschnitt enthaltene Frequenzspektrum, aufgeteilt auf sieben Frequenzbänder. Fig. 6c zeigt die oberhalb der jeweiligen Schwelle liegenden Werte; Fig. 6d die aufaddierten Resultate.

Im Unterschied zu den in Fig. 3 und 4 dargestellten Muss-Auslöse-Situationen enthalten die Nicht-Auslöse-Situationen nach Fig. 5 und 6 meist nur ein oder zwei typische Frequenzen, die durch die Fahrzeugkonstruktion bestimmt sind welche da wären Schwingungen des Fahrwerks, Schwingungen im Fahrzeug, Resonanzen der Befestigungsstellen des Sensors, oder ähnliches. Muss-Auslöse-Situationen, insb. für den Seitenairbag, sind dagegen durch die Intrusion, also dem Eindringen eines Objektes in das Fahrzeug und damit durch die Deformation der Seitenstruktur gekennzeichnet. Diese Deformation führt im Ausgangssignal (a) des Beschleunigungs- oder Drucksensors zu einem breiten Spektrum vieler Frequenzen, verursacht durch die Verformung oder das Brechen von Strukturen des Fahrzeugs.

Die vorliegende Erfindung analysiert das Ausgangssignals (a) eines Beschleunigungs- oder Drucksensors auf Frequenzen innerhalb eines bestimmten interessanten Bereichs bzw. Signalabschnitts. Sie beschreibt eine verbesserte Methode, insb. bei Seitenaufprallereignissen, eine Unterscheidung von Nicht-Auslöse-Situationen und Muss-Auslöse-Situationen zu treffen, indem das Frequenzspektrum des Ausgangssignals (a) möglichst umfassend ausgewertet wird.

Die Vorteile der Erfindung liegen zum einen in der Robustheit gegenüber Veränderungen der Signalamplituden. Zum anderen benötigt die Erfindung keine Vorkenntnisse oder einen entsprechenden Informationsspeicher über mögliche Resonanzfrequenzen. Nicht zuletzt ist es eine Stärke der Erfindung, dass keinerlei Frequenzen des Ausgangssignals (a) geblockt oder ausgeblendet werden.

Die vorliegende Erfindung eignet sich daher insbesondere für Insassenschutzsysteme eines modernen Kraftfahrzeuges.

## Patentansprüche

1. Verfahren zur Erkennung eines Aufpralls, insbesondere eines Seitenaufpralls, für Insassenschutzmittel (7, 8, 9, 10) in einem Kraftfahrzeug (1), bei dem kontinuierlich ein Signalabschnitt des Ausgangssignal (a) eines Beschleunigungs- oder Drucksensors (6) im Hinblick auf die darin enthaltenen Frequenzen analysiert wird, wobei
- das im Signalabschnitt enthaltene Frequenzspektrum zunächst in eine geeignete Anzahl Frequenzbänder aufgeteilt wird;
- anschließend für jedes Frequenzband die vorhandene Signalenergie ermittelt wird;
- danach die so gewonnene partielle Signalenergie mit der gesamten Energie des betrachteten Signalabschnitts ins Verhältnis gesetzt wird; und
- die so gewonnenen relativen Aktivierungen der verschiedenen Frequenzbänder mit vorgegebenen Schwellwerten (SW) verglichen werden.

2. Verfahren nach Anspruch 1, bei dem zwecks Ermittlung der Signalenergie des jeweiligen Frequenzbandes die Einzelwerte des Signalabschnitts nacheinander mit verschiedenen alternierenden Folgen von "+1" und "-1" in der jeweiligen Frequenz eines jeden Frequenzbandes multipliziert und die Resultate aufaddiert werden.

3. Verfahren nach Anspruch 1 oder 2, bei dem die relativen Aktivierungen der verschiedenen Frequenzbänder vor dem Vergleich mit den vorgegebenen Schwellwerten (SW) geglättet werden.

4. Verfahren nach Anspruch 1 bis 3, bei dem die Anzahl der überschrittenen Schwellwerte (SW) als Maßzahl dafür gilt, ob nur wenige Frequenzen enthalten sind, oder ob der betrachtete Signalabschnitt ein breites Spektrum vieler Frequenzen gleichzeitig enthält.

5. Verfahren nach Anspruch 4, bei dem die Maßzahl, ggf. durch Subtraktion mit einem Faktor, positive wie negative Werte annehmen kann, beispielsweise von - 3 bis + 4.

6. Verfahren nach Anspruch 4 oder 5, bei dem die Maßzahl eine Wichtung erfährt, indem sie beispielsweise mit einem, vorzugsweise frei einstellbaren, Skalierungsfaktor multipliziert wird.

7. Verfahren nach Anspruch 4 bis 6, bei dem die Maßzahl in eine Auslöseschwelle einfließt, mit welcher ein Auslösekriterium für das Insassenschutzmittel verglichen wird, wobei erst beim Überschreiten der Auslöseschwelle eine Freigabe des Insassenschutzmittels erfolgt.

8. Verfahren nach Anspruch 7, bei dem bei hoher Maßzahl die Auslöseschwelle empfindlicher beziehungsweise bei niedriger Maßzahl die Auslöseschwelle unempfindlicher wird.

9. Vorrichtung zur Erkennung eines Aufpralls, insb. eines Seitenaufpralls, für Insassenschutzmittel (7,8,9,10) in einem Kraftfahrzeug (1), **gekennzeichnet durch** ein Mittel zum kontinuierlichen Analysieren des Ausgangssignals (a) eines Beschleunigungs- oder Drucksensors (6) im Hinblick auf die darin enthaltenen Frequenzen nach einem der vorherigen Verfahrensansprüche.

10. Vorrichtung nach Anspruch 9, **gekennzeichnet durch** einen Puffer (11) fester Länge, in welchem das zu analysierende Ausgangssignal (a) so zwischengespeichert wird, dass die Analyse zum aktuellen Zeitpunkt immer einen Signalabschnitt des Ausgangssignals (a) vom aktuellsten oder einen anderen geeigneten Wert bis zu einem definierten Zeitraum in der Vergangenheit bearbeitet.

11. Vorrichtung nach Anspruch 9 oder 10, **gekennzeichnet durch** einen Puffer (11) fester Länge, welcher den jeweils ältesten Wert des Ausgangssignals (a) **durch** den aktuellsten ersetzt.

12. Vorrichtung nach einem der Ansprüche 9 bis 11, **dadurch gekennzeichnet, dass** ein Beschleunigungs- bzw. Drucksensor (6) im oder benachbart eines potentiellen Deformationsbereiches im Kraftfahrzeug (1) angeordnet ist, vorzugsweise paarweise auf Höhe einer jeden Sitzreihe.

## Claims

1. Method for recognising a collision, especially a side impact, for passenger protection means (7,8,9,10) in a motor vehicle (1), in which a signal interval of the output signal (a) of an acceleration or pressure sensor (6) is continuously analysed with regard to the frequencies contained therein, wherein,
- the frequency spectrum contained in the signal interval is first divided up into a suitable number of frequency bands;
- the signal energy present for each frequency band is then determined;
- the partial signal energy obtained in this manner is then set in relation to the total energy of the signal interval examined; and
- the relative activations of the various frequency bands thus obtained are compared with predetermined threshold values (SW).

2. Method according to claim 1, in which, for the purposes of determining the signal energy of the respective frequency band, the individual values of the signal interval are successively multiplied by various alternating sequences of "+1" and "-1" in the respective frequency of each frequency band and the results added up.

3. Method according to claim 1 or claim 2, in which the relative activations of the various frequency bands are equalised before being compared with the predetermined threshold values (SW).

4. Method according to claim 1 to claim 3, in which the number of threshold values (SW) exceeded is deemed to be a coefficient for whether only a few frequencies are contained or whether the signal interval examined simultaneously contains a broad spectrum of many frequencies.

5. Method according to claim 4, in which the coefficient, possibly by being subtracted by a factor, can assume positive and negative values, for example from -3 to +4.

6. Method according to claim 4 or claim 5, in which the coefficient is given a weighting by being multiplied, for example, by a scaling factor that is preferably freely adjustable.

7. Method according to claim 4 to claim 6, in which the coefficient influences a trigger threshold with which a trigger criterion for the passenger protection means is compared, wherein the passenger protection means is released only if the trigger threshold is exceeded.

8. Method according to claim 7, in which the trigger threshold becomes more sensitive when the coefficient is high and the trigger threshold becomes less sensitive when the coefficient is low.

9. Device for recognising a collision, especially a side impact, for passenger protection means (7,8,9,10) in a motor vehicle (1), **characterised by** a means for continuously analysing the output signal (a) of an acceleration or pressure sensor (6) with regard to the frequencies contained therein according to any one of the preceding claims.

10. Device according to claim 9, **characterised by** a buffer (11) of fixed length in which the output signal (a) to be analysed is intermediately stored such that the analysis at the current time always processes a signal interval of the output signal (a) from the most recent or another suitable value to a defined period in the past.

11. Method according to claim 9 or claim 10, **characterised by** a buffer (11) of fixed length which replaces the oldest respective value of the output signal (a) with the most up-to-date.

12. Device according to any one of claims 9 to 11, **characterised in that** an acceleration or pressure sensor (6) is arranged in or adjacent to a potential deformation area in the motor vehicle (1), preferably in pairs at the height of each row of seats.

## Revendications

1. Procédé de détection d'un choc, en particulier d'un choc latéral, destiné à un moyen de protection des passagers (7, 8, 9, 10) dans un véhicule à moteur (1), dans lequel les fréquences contenues dans une fraction de signal de sortie (a) d'un capteur d'accélération ou de pression sont analysées en permanence, dans lequel
- le spectre de fréquences contenu dans la fraction de signal est d'abord réparti en un nombre adapté de bandes de fréquences ;
- l'énergie de signal présente est ensuite déterminée pour chaque bande de fréquences ;
- l'énergie de signal partielle, ainsi acquise, est ensuite mise en relation avec la totalité de l'énergie de la fraction de signal étudiée et
- les activations relatives ainsi acquises des différentes bandes de fréquences sont comparées à des valeurs seuils prédéterminées (SW).

2. Procédé selon la revendication 1, dans lequel, pour déterminer l'énergie de signal de chaque bande de fréquences, les valeurs individuelles de la fraction de signal sont successivement multipliées par des séquences faisant alterner des "+1" et des "-1" dans chaque fréquence de chaque bande de fréquences et les résultats sont additionnés.

3. Procédé selon la revendication 1 ou 2, au cours duquel les activations relatives des différentes bandes de fréquences sont lissées avant la comparaison avec les valeurs seuils prédéterminées (SW).

4. Procédé selon les revendications 1 à 3, au cours duquel le nombre des valeurs seuils (SW) franchies constitue l'indice de la présence d'un petit nombre de fréquences ou de la présence simultanée d'un large spectre de nombreuses fréquences dans le signal.

5. Procédé selon la revendication 4, dans lequel l'indice, éventuellement par soustraction d'un facteur, peut prendre des valeurs positives ou négatives, de -3 à +4, par exemple.

6. Procédé selon la revendication 4 ou 5, dans lequel l'indice subit une pondération en étant multiplié, par exemple, par un facteur d'échelle, de préférence librement réglable.

7. Procédé selon les revendications 4 à 6, dans lequel l'indice entre dans un seuil de déclenchement, avec lequel un critère de déclenchement du moyen de protection des passagers est comparé, dans lequel seul un franchissement du seuil de déclenchement entraîne une mise en oeuvre du moyen de protection des passagers.

8. Procédé selon la revendication 7, dans lequel un indice élevé entraîne l'augmentation de la sensibilité d'un seuil de déclenchement et un indice faible sa diminution.

9. Dispositif de détection d'un choc, en particulier d'un choc latéral, destiné à un moyen de protection des passagers (7, 8, 9, 10) dans un véhicule à moteur (1), **caractérisé par** un moyen permettant d'analyser en permanence la présence de fréquences d'une fraction de signal de sortie (a) d'un capteur d'accélération ou de pression (6) selon l'une des revendications de procédé précédentes.

10. Dispositif selon la revendication 9, **caractérisé par** un tampon (11) de longueur fixe, dans lequel est stocké transitoirement le signal de sortie (a), de façon que l'analyse actuelle traite toujours une fraction du signal de sortie (a) de la valeur la plus actuelle possible ou une autre valeur adaptée jusqu'à un moment défini du passé.

11. Dispositif selon la revendication 9 ou 10, **caractérisé par** un tampon (11) de longueur fixe qui remplace la valeur la plus ancienne du signal de sortie (a) par la plus actuelle.

12. Dispositif selon l'une des revendications 9 à 11, **caractérisé en ce qu'**un capteur d'accélération et de pression (6) est placé dans, ou à proximité d'une zone de déformation potentielle du véhicule à moteur (1), de préférence en les couplant à hauteur de chaque rangée de sièges.
